# EUROPÄISCHE PATENTSCHRIFT

(11) **EP 3 804 003 B1**
(45) Veröffentlichungstag und Bekanntmachung des Hinweises auf die Patenterteilung: **16.10.2024**
(21) Anmeldenummer: 19729193.3
(22) Anmeldetag: 27.05.2019
(51) Int. Cl.: H01M 50/213, H01M 50/249, H01M 50/242, H01M 50/289

(54) **GEHÄUSE FÜR EIN BATTERIEMODUL UND BATTERIEMODUL**
HOUSING FOR A BATTERY MODULE, AND BATTERY MODULE
BOÎTIER POUR MODULE DE BATTERIE ET MODULE DE BATTERIE

(30) Priorität: 28.05.2018 DE 102018208342
(43) Veröffentlichungstag der Anmeldung: 14.04.2021
(73) Patentinhaber: Robert Bosch GmbH, 70442 Stuttgart (DE)
(72) Erfinder: FOMEN, Gilles Desmond, 74081 Heilbronn (DE); MAENNER, Manuel, 70619 Stuttgart (DE); ZINK, Markus, 70439 Stuttgart (DE)
(86) Internationale Anmeldenummer: PCT/EP2019/063697
(87) Internationale Veröffentlichungsnummer: WO 2019/229006

(56) Entgegenhaltungen:
- DE-A1- 102016 220 989
- DE-U1- 202011 109 863
- JP-A- 2004 220 869
- US-A1- 2014 287 288

## Beschreibung

Die vorliegende Erfindung betrifft ein Gehäuse für ein Batteriemodul, welches zur Aufnahme mindestens einer Batteriezelle dient. Das Gehäuse umfasst mindestens einen Batteriezellhalter, welcher mindestens eine Vertiefung aufweist, welche zumindest annährend kreiszylindrisch und zumindest annährend rotationssymmetrisch zu einer in eine Axialrichtung verlaufende Mittelachse ausgebildet ist, und welche sich von einer Oberseite des Batteriezellhalters auf eine Unterseite des Batteriezellhalters zu erstreckt. In der mindestens einen Vertiefung ist dabei mindestens ein Axialfederelement derart angeordnet, dass eine in die mindestens eine Vertiefung eingesetzte Batteriezelle in der Axialrichtung federelastisch aufgenommen ist. Die Erfindung betrifft auch ein Batteriemodul, welches mindestens ein erfindungsgemäßes Gehäuse umfasst.

### Stand der Technik

Batteriemodule für Elektrofahrzeuge weisen typischerweise Gehäuse mit einem Halter zur Aufnahme von Batteriezellen auf. Häufig werden die Batteriezellen von federelastischen, elektrischen Kontakten kraftschlüssig in Längsrichtung gehalten, wodurch der elektrische Kontakt bei mechanischen Vibrationen oder Stößen mechanisch belastet wird.

Es sind auch Gehäuse für Batteriemodule zur Aufnahme von kreiszylindrischen Batteriezellen bekannt, welche Federelemente aufweisen, welche aus elektrisch isolierendem Material gefertigt sind, beispielsweise aus einem Polymer. Die elektrische Kontaktierung der Batteriezellen wird somit bei Vibrationen oder Stößen mechanisch nicht belastet.

Ein gattungsgemäßes Gehäuse für ein Batteriemodul ist aus dem Dokument DE 10 2016 220 989 A1 bekannt. Das Gehäuse umfasst einen Batteriezellhalter, welcher mehrere Vertiefungen aufweist, in welche mehrere kreiszylindrische Batteriezellen einsetzbar sind. Die Vertiefungen erstrecken sich dabei jeweils in eine Axialrichtung. In jeder Vertiefung ist dabei ein Axialfederelement derart angeordnet, dass eine in die Vertiefung eingesetzte Batteriezelle in der Axialrichtung federelastisch aufgenommen ist.

Das Dokument DE 10 2015 104 264 A1 offenbart eine Traktionsbatterie-Thermoplattenanordnung. Die Anordnung weist eine Struktur auf, die einen Hohlraum definiert, und zur Unterstützung einer Batteriezellenreihe konfiguriert ist, und eine innerhalb des Hohlraums und angrenzend an die Reihe angebrachte Thermoplatte und ein Federpaket, das innerhalb des Hohlraums zwischen der Struktur und der Platte angebracht ist. Das Federpaket ist derart konfiguriert, dass eine Kraft auf die Platte ausgeübt wird, so dass die Platte die Reihe berührt, um Hitze zwischen der Reihe und der Platte zu übertragen.

Das Dokument DE 10 2011 101 022 A1 offenbart ein Batteriepaket, wobei das Batteriepaket eine Mehrzahl von Batteriezellen und eine Anordnung zur Halterung einer Mehrzahl von Batteriezellen aufweist, wobei die Anordnung zur Halterung mindestens ein Gehäuse, mindestens eine bodenseitige Halteeinrichtung und mindestens eine deckelseitige Halteeinrichtung umfasst, wobei die bodenseitige Halteeinrichtung an einer Bodenseite des Gehäuses angeordnet ist oder eine Bodenseite des Gehäuses ausbildet, wobei die deckelseitige Halteeinrichtung an einer Deckelseite des Gehäuses angeordnet ist oder eine Deckelseite des Gehäuses ausbildet.

In dem Dokument DE 10 2013 201 102 A1 ist eine Vorrichtung zur Temperierung von Batteriezellen einer Batterie beschrieben, wobei die Vorrichtung zur thermischen Kontaktierung der Batteriezellen mit der Vorrichtung eine Kontaktfläche aufweist, welche derart ausgebildet ist, dass die zu temperierenden Batteriezellen auf der Kontaktfläche anordbar sind, wobei die Vorrichtung unterhalb der Kontaktfläche Elemente aufweist, welche elastisch rückstellend ausgebildet sind, derart, dass sich die Kontaktfläche bei Einwirkung einer orthogonal zu der Kontaktfläche wirkenden Druckbelastung indem Bereich der einwirkenden Druckbelastung absenkt, wobei eine Rückstellkraft entgegen der Druckbelastung wirkt.

Das Dokument EP 2 290 731 B1 offenbart ein Batteriepack mit einer Vielzahl an Batterien und Haltern. Die Halter weisen Einsatzbereiche für die Fixierung von Batteriezellen auf.

Aus der US 2014 287288 A1 ist eine Batteriehalterung mit federelastischer axialer und radialer Aufnahme für die Batteriezellen bekannt.

### Offenbarung der Erfindung

Es wird ein Gehäuse für ein Batteriemodul vorgeschlagen. Das Gehäuse dient zur Aufnahme mindestens einer Batteriezelle. Das Gehäuse umfasst mindestens einen Batteriezellhalter, welcher mindestens eine Vertiefung aufweist, die zumindest annährend kreiszylindrisch und zumindest annährend rotationssymmetrisch zu einer in eine Axialrichtung verlaufende Mittelachse ausgebildet ist, und welche sich von einer Oberseite des Batteriezellhalters auf eine Unterseite des Batteriezellhalters zu erstreckt. Dabei ist in der mindestens einen Vertiefung des Batteriezellhalters mindestens ein Axialfederelement derart angeordnet, dass eine in die mindestens eine Vertiefung des Batteriezellhalters eingesetzte Batteriezelle in der Axialrichtung federelastisch aufgenommen ist.

Erfindungsgemäß ist an einer Innenwand der Vertiefung des Batteriezellhalters ein Radialfederelement derart angeordnet, dass die in die mindestens eine Vertiefung des Batteriezellhalters eingesetzte Batteriezelle in einer Radialrichtung federelastisch aufgenommen ist. Die Axialrichtung und die Radialrichtung definieren dabei ein Zylinderkoordinatensystem.

Gemäß der Erfindung ist an dem Axialfederelement ein Federkontaktelement angeordnet, welches sich in Axialrichtung auf die Oberseite des Batteriezellhalters zu erstreckt. Das Axialfederelement ist dazu eingerichtet, bei einer federelastischen Aufnahme einer Batteriezelle eine Federkraft des Axialfederelements auf die Batteriezelle zu übertragen.

Erfindungsgemäß weist das Federkontaktelement zwei Vorsprünge auf, welche sich in Radialrichtung von der Mittelachse weg erstrecken. Die Vorsprünge erstrecken sich also in Radialrichtung nach außen und somit auf die Innenwand der Vertiefung des Batteriezellhalters zu.

Bevorzugt ist ein zwischen den zwei Vorsprüngen des Federkontaktelements befindlicher Mittelbereich konkav ausgebildet.

Gemäß einer vorteilhaften Ausgestaltung der Erfindung ragt das Radialfederelement von der Innenwand in Radialrichtung in die Vertiefung hinein. Dabei ist ein Spalt zwischen dem Radialfederelement und dem konkaven Mittelbereich des Federkontaktelements gebildet.

Vorzugsweise ist dabei eine Spaltbreite des Spaltes zwischen dem Radialfederelement und dem konkaven Mittelbereich des Federkontaktelements in einer Richtung rechtwinklig zu der Axialrichtung zumindest annährend konstant. Die Spaltbreite entspricht einem Abstand zwischen dem Radialfederelement und dem konkaven Mittelbereich des Federkontaktelements.

Bevorzugt ist ein der Mittelachse zugewandter Innenbereich des Axialfederelements kreisbogenförmig ausgebildet. Der Radius des kreisbogenförmigen Innenbereichs ist derart gewählt, dass sich das Axialfederelement an einen Pluspol einer eingesetzten Batteriezelle anschmiegt.

Gemäß einer vorteilhaften Weiterbildung der Erfindung ist in der mindestens einen Vertiefung mindestens ein Anschlagselement zur Begrenzung einer Biegung des Axialfederelements vorgesehen. Gemäß einer möglichen Ausgestaltung der Erfindung ist das mindestens eine Anschlagselement an der Innenwand der Vertiefung angebracht. Gemäß einer weiteren möglichen Ausgestaltung der Erfindung ist das mindestens eine Anschlagselement an dem Axialfederelement angebracht. Vorteilhaft ist eine der Oberseite des Batteriezellhalters zugewandte Oberfläche des mindestens einen Anschlagselements in Axialrichtung weiter von der Oberseite entfernt als eine der Oberseite zugewandte Oberfläche des mindestens einen Federkontaktelements.

Es wird auch ein Batteriemodul vorgeschlagen, welches mindestens ein erfindungsgemäßes Gehäuse und mindestens eine in dem erfindungsgemäßen Gehäuse aufgenommene Batteriezelle umfasst.

Bevorzugt umfasst das mindestens eine Gehäuse zwei Batteriezellhalter, welche derart angeordnet sind, dass die Oberseiten der beiden Batteriezellhalter einander zugewandt sind. Dabei ist die mindestens eine Batteriezelle in jeweils eine Vertiefung der beiden Batteriezellhalter eingesetzt.

### Vorteile der Erfindung

Mittels eines erfindungsgemäßen Gehäuses für ein Batteriemodul ist es möglich, Batteriezellen, insbesondere kreiszylindrische Batteriezellen, in Axialrichtung und in Radialrichtung federelastisch aufzunehmen. Dadurch ist ein Toleranzausgleich für unterschiedliche Längen und gleichzeitig für unterschiedliche Durchmesser der Batteriezellen möglich. Durch den Aufbau des Gehäuses aus zwei identisch ausgebildeten Batteriezellhaltern, welche in einem einzigen Spritzguss-Werkzeug herstellbar sind, werden die Fertigungskosten für das Batteriemodul reduziert.

Je breiter der Spalt zwischen dem Radialfederelement und dem Federkontaktelement ist, umso besser ist die Zugänglichkeit des Radialfederelements in dem Spritzgusswerkzeug. Umso größer ist damit auch die Möglichkeit, an dem Spritzgusswerkzeug eine Quetschrippe des Radialfederelements nachzubearbeiten, insbesondere zu vergrößern. Dadurch werden Vibrationen besonders in Axialrichtung und in Radialrichtung noch stärker gedämpft. Die Ausgestaltung des Federkontaktelements mit den zwei Vorsprüngen gewährleistet, dass das Federkontaktelement eine ausreichend große Fläche aufweist, welche auf die Stirnseite der Batteriezelle drückt. Die besagte Fläche des Federkontaktelements ist dabei derart angeordnet, dass das Federkontaktelement nicht auf den Pluspol und den Isolator der Batteriezelle drückt. Die Form des axialen Federkontaktelementes soll möglichst auf den stabilen Rand der Batteriezelle drücken.

### Kurze Beschreibung der Zeichnungen

Ausführungsformen der Erfindung werden anhand der Zeichnungen und der nachfolgenden Beschreibung näher erläutert.

Es zeigen:
- Figur 1:: eine schematische Schnittdarstellung eines Batteriezellhalters,
- Figur 2:: eine schematische Schnittdarstellung eines Batteriemoduls,
- Figur 3:: eine schematische, perspektivische Darstellung eines Batteriemoduls,
- Figur 4:: eine perspektivische Ansicht einer Vertiefung von der Unterseite des Batteriezellhalters,
- Figur 5:: eine perspektivische Ansicht einer Vertiefung von der Oberseite des Batteriezellhalters und
- Figur 6:: eine Draufsicht auf eine Batteriezelle in einer Vertiefung von der Unterseite des Batteriezellhalters.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

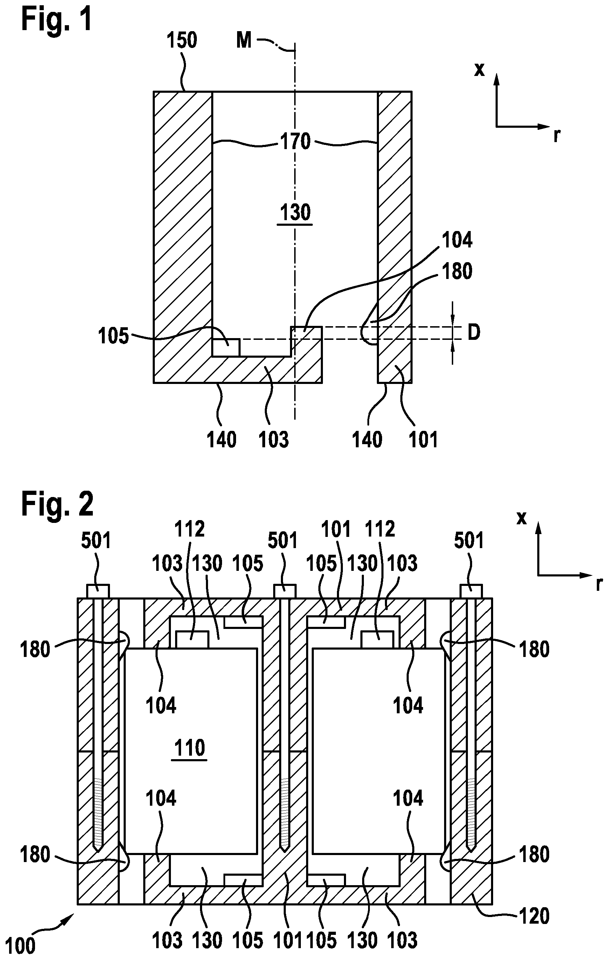

Figur 1 zeigt eine schematische Schnittdarstellung eines Batteriezellhalters 101 eines hier nicht dargestellten Gehäuses 120 für ein Batteriemodul 100. Der Batteriezellhalter 101 ist aus einem elektrisch isolierenden Material, insbesondere aus einem Polymermaterial, gefertigt. Der Batteriezellhalter 101 weist eine Unterseite 140 und eine der Unterseite 140 gegenüberliegende Oberseite 150 auf. Die Unterseite 140 und die Oberseite 150 verlaufen annähernd parallel zueinander und rechtwinklig zu einer Axialrichtung x. Eine rechtwinklig zu der Axialrichtung x orientierte Richtung wird als Radialrichtung r bezeichnet. Die Axialrichtung x und die Radialrichtung r definieren ein Zylinderkoordinatensystem.

In die Oberseite 150 des Batteriezellhalters 101 ist eine Vertiefung 130 eingebracht. Die Vertiefung 130 ist annährend kreiszylindrisch und annährend rotationssymmetrisch zu einer Mittelachse M ausgebildet, welche in die Axialrichtung x verläuft. Die Vertiefung 130 erstreckt sich von der Oberseite 150 auf die Unterseite 140 zu. Der Batteriezellhalter 101 umfasst eine Vielzahl von derartigen Vertiefungen 130, wobei hier nur eine der Vertiefungen 130 dargestellt ist. Jede der besagten Vertiefungen 130 dient zur Aufnahme jeweils einer insbesondere kreiszylindrisch ausgestalteten Batteriezelle 110.

Jede Vertiefung 130 ist der Radialrichtung r jeweils von einer Innenwand 170 begrenzt. An der Oberseite 150 des Batteriezellhalters 101 ist die Vertiefung 130 offen, wodurch ein Einsetzen einer Batteriezelle 110 ermöglicht ist. An der Unterseite 140 des Batteriezellhalters 101 ist ein Axialfederelement 103 angebracht. Das Axialfederelement 103 ist an der Innenwand 170 angeordnet und ragt von dort in die Vertiefung 130 hinein. Das Axialfederelement 103 ist derart angeordnet und ausgestaltet, dass eine in die Vertiefung 130 eingesetzte Batteriezelle 110 in der Axialrichtung x federelastisch aufgenommen ist.

An dem Axialfederelement 103 ist ein Federkontaktelement 104 angeordnet. Das Federkontaktelement 104 erstreckt sich in der Axialrichtung x auf die Oberseite 150 des Batteriezellhalters 101 zu. Das Federkontaktelement 104 dient dazu, bei einer federelastischen Aufnahme einer Batteriezelle 110 eine Federkraft des Axialfederelements 103 auf die Batteriezelle 110 zu übertragen. Das Federkontaktelement 104 ist dabei in Kontakt mit der eingesetzten Batteriezelle 110. Die besagte Federkraft wird insbesondere durch eine Biegung des Axialfederelements 103 erzeugt.

In der Vertiefung 130 sind ferner zwei Anschlagselemente 105 vorgesehen, wobei in der hier gezeigten Darstellung nur eines der Anschlagselemente 105 sichtbar ist. Die Anschlagselemente 105 dienen zur Begrenzung einer Biegung sowie eines Federwegs des Axialfederelements 103 in die Axialrichtung x. Die Anschlagselemente 105 sind gemäß einer möglichen Ausführungsform an der Innenwand 170 der Vertiefung 130 angebracht. Gemäß einer anderen möglichen Ausführungsform sind die Anschlagselemente 105 an dem Axialfederelement 103 angebracht, vorzugsweise Radialrichtung r außen, also in der Nähe der Innenwand 170. Die Anschlagselemente 105 können auch gleichzeitig mit der Innenwand 170 und mit dem Axialfederelement 103 verbunden sein.

An der Innenwand 170 der Vertiefung 130 ist ferner ein Radialfederelement 180 angeordnet. Das Radialfederelement 180 ist derart angeordnet und ausgestaltet, dass eine in die Vertiefung 130 eingesetzte Batteriezelle 110 in der Radialrichtung r federelastisch aufgenommen ist. Das Radialfederelement 180 ragt von der Innenwand 170 in Radialrichtung r in die Vertiefung 130 hinein. Das Radialfederelement 180 ist von dem Axialfederelement 103, von dem Federkontaktelement 104 und von den Anschlagselementen 105 beabstandet an der Innenwand 170 der Vertiefung 130 angebracht. Das Radialfederelement 180 kann beispielsweise als Quetschrippe ausgeführt sein.

Die Anschlagselemente 105 weisen jeweils eine Oberfläche auf, welche der Oberseite 150 zugewandt ist. Auch das Federkontaktelement 104 weist eine Oberfläche auf, welche der Oberseite 150 zugewandt ist. Die Oberflächen der Anschlagselemente 105 sind in Axialrichtung x um eine Distanz D zu der Oberfläche des Federkontaktelements 104 versetzt. Die Anschlagselemente 105 und das das Federkontaktelement 104 sind derart in der Vertiefung 130 angeordnet, dass die der Oberseite 150 zugewandten Oberflächen der Anschlagselemente 105 in Axialrichtung x weiter von der Oberseite 150 entfernt sind als die der Oberseite 150 zugewandte Oberfläche des Federkontaktelements 104. Dadurch wird ein Federweg des Axialfederelements 103 auf die Distanz D begrenzt.

Der Batteriezellhalter 101 kann gemeinsam mit dem Axialfederelement 103, dem Federkontaktelement 104, den Anschlagselemente 105 sowie dem Radialfederelement 180 einstückig in einem Spritzgießprozess hergestellt sein. Beispielsweise ist der Batteriezellhalter 101 aus Polyamid oder aus einem anderen Polymermaterial gefertigt. In einer alternativen Ausführungsform ist das Axialfederelement 103 ein Einlegeteil in einem Spritzgießverfahren, so dass das Axialfederelement 103 und der Batteriezellhalter 101 jeweils ein Polymermaterial umfassen, wobei sich das Polymermaterial des Axialfederelements 103 von dem Polymermaterial des Batteriezellhalters 101 unterscheiden kann. Das Axialfederelement 103 kann beispielsweise ein Polymermaterial mit einer höheren Steifigkeit oder Elastizität als das Polymermaterial des Batteriezellhalters 101aufweisen.

Figur 2 zeigt eine schematische Schnittdarstellung eines Batteriemoduls 100. Das Batteriemodul 100 umfasst ein Gehäuse 120, in welchem mehrere Batteriezellen 110 aufgenommen sind. Das Batteriemodul 100 umfasst eine Vielzahl von Batteriezellen 110, wobei hier nur zwei Batteriezellen 110 dargestellt sind. Jede der Batteriezellen 110 weist einen Pluspol 112 auf, welcher von einer Stirnseite eines annähernd kreiszylindrischen Grundkörpers der Batteriezelle 110 in Axialrichtung x weg ragt. An der gegenüberliegenden Stirnseite des Grundkörpers der Batteriezelle 110 ist ein Minuspol annähernd flach ausgebildet. Die Pluspole 112 sowie die Minuspole der Batteriezellen 110 sind mittels elektrischer Leitungen, die hier nicht dargestellt sind, zu einer Serienschaltung und/oder einer Parallelschaltung der Batteriezellen 110 verbunden.

Das Gehäuse 120 des Batteriemoduls 100 umfasst zwei Batteriezellhalter 101, welche in Figur 1 dargestellt sind. Die zwei Batteriezellhalter 101 sind dabei derart angeordnet, dass die Oberseiten 150 der beiden Batteriezellhalter 101 einander zugewandt sind und aneinander anliegen. Die Unterseiten 140 der beiden Batteriezellhalter 101 weisen voneinander weg. Die beiden Batteriezellhalter 101 sind kraft- und/oder formschlüssig mittels Fixierungselementen aneinander fixiert, beispielsweise, wie dargestellt, durch Schrauben 501.

Die beiden Batteriezellhalter 101 sind dabei identisch ausgebildet. Die identische Ausbildung der beiden Batteriezellhalter 101 ermöglicht die Herstellung der Batteriezellhalter 101 in einem einzigen Spritzguss-Werkzeug. Dadurch werden Fertigungskosten vorteilhaft reduziert.

Jeder der beiden Batteriezellhalter 101 weist pro Vertiefung 130 ein Axialfederelement 103 mit einem Federkontaktelement 104, zwei Anschlagselemente 105 sowie ein Radialfederelement 180 auf. Jede der Batteriezellen 110 ist derart in dem Gehäuse 120 aufgenommen, dass ein Teil der Batteriezelle 110, welcher den Pluspol 112 umfasst, in eine Vertiefung 130 des einen Batteriezellhalters 101 eingesetzt ist, und dass ein anderer Teil der Batteriezelle 110, welcher den Minuspol umfasst, in eine Vertiefung 130 des anderen Batteriezellhalters 101 eingesetzt ist. Die Batteriezellen 110 sind dabei in den Vertiefungen 130 beider Batteriezellhalter 101 in Axialrichtung x sowie in Radialrichtung r fixiert.

Die Axialfederelemente 103 sind dazu eingerichtet Vibrationen des Batteriemoduls 100, beziehungsweise mechanische Stöße in Axialrichtung x zu dämpfen, so dass mechanische Belastungen an hier nicht dargestellten elektrischen Kontakten zu den Batteriezellen 110 minimiert werden. Die Anschlagselemente 105 begrenzen dabei die Biegung sowie den Federweg der Axialfederelemente 103 um eine Materialermüdung der Axialfederelemente 103 zu verhindern. Die Radialfederelemente 180 dämpfen Vibrationen des Batteriemoduls 100, beziehungsweise mechanische Stöße, insbesondere in Axialrichtung und auch in Radialrichtung r.

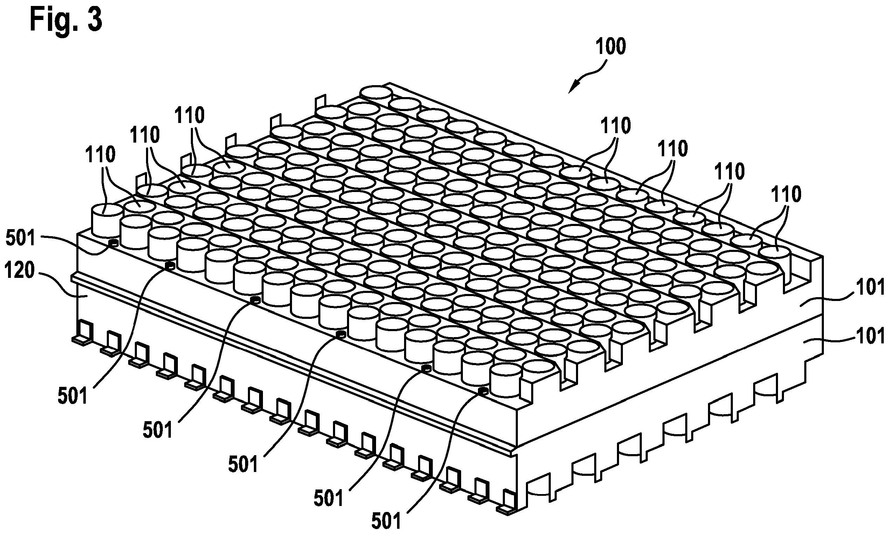

Figur 3 zeigt eine schematische, perspektivische Darstellung eines Batteriemoduls 100. Das Batteriemodul 100 umfasst ein Gehäuse 120, in welchem eine Vielzahl von Batteriezellen 110 aufgenommen ist. Das Gehäuse 120 des Batteriemoduls 100 umfasst zwei Batteriezellhalter 101, welche wie in Figur 2 dargestellt angeordnet sind. Das Batteriemodul 100 umfasst in diesem Ausführungsbeispiel 195 Batteriezellen 110, wobei jede Batteriezelle 110 in einer Vertiefung 130 des einen Batteriezellhalters 101 und in einer Vertiefung 130 des anderen Batteriezellhalters 101 eingesetzt ist. Alternativ kann das Batteriemodul 100 eine andere Anzahl von Batteriezellen 110 umfassen.

Der eine Batteriezellhalter 101 und der andere Batteriezellhalter 101 sind durch als Schrauben 501 ausgestaltete Fixierelemente aneinander fixiert. Die Batteriezellen 110 sind in den Vertiefungen 130 der beiden Batteriezellhalter 101 jeweils in Axialrichtung x und in Radialrichtung r federelastisch aufgenommen.

Die Herstellung des Batteriemoduls 100 wird in mehreren Schritten durchgeführt. In einem ersten Schritt erfolgt die Bereitstellung des einen Batteriezellhalters 101. Anschließend werden in einem weiteren Schritt die Batteriezellen 110 in die Vertiefungen 130 des bereitgestellten Batteriezellhalters 101 eingebracht. In einem nachfolgenden Schritt erfolgt die Anordnung des anderen Batteriezellhalters 101 auf dem einen Batteriezellhalter 101. Bevorzugt sind zur Ausrichtung der beiden Batteriezellhalter 101 zueinander an den Batteriezellhaltern 101 entsprechende Führungselemente, beispielsweise Führung und Nuten, vorgesehen. Abschließend werden in einem weiteren Schritt die beiden Batteriezellhalter 101 mittels der Fixierungselemente, vorliegend mittels Schrauben 501, kraft- und/oder formschlüssig verbunden. Die Verbindung erfolgt dabei bevorzugt reversibel, so dass das Gehäuse 120 zum Auswechseln von Batteriezellen 110 geöffnet werden kann.

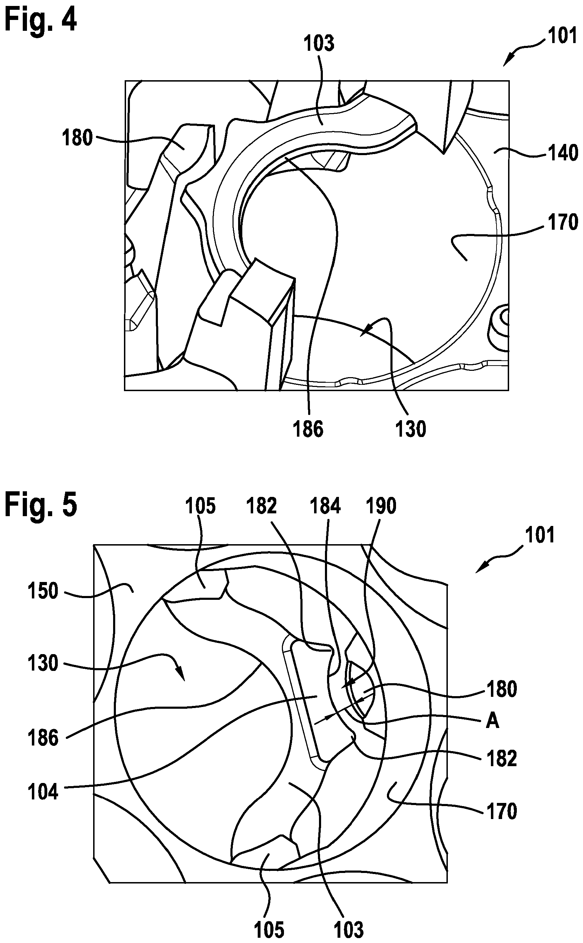

Figur 4 zeigt eine perspektivische Ansicht einer Vertiefung 130 von der Unterseite 140 des Batteriezellhalters 101. Das Axialfederelement 103 ist annähernd halbkreisförmig ausgeführt und an zwei diametral annähernd gegenüberliegenden Stellen an der Innenwand 170 der Vertiefung 130 angebracht. Ein der Mittelachse M zugewandter Innenbereich 186 des Axialfederelements 103 ist kreisbogenförmig ausgebildet. Der Radius des kreisbogenförmigen Innenbereichs 186 ist dabei derart gewählt, dass sich das Axialfederelement 103 an einen Pluspol 112 einer eingesetzten Batteriezelle 110 anschmiegt. Das Radialfederelement 180 ragt von der Innenwand 170 in Radialrichtung r in die Vertiefung 130 hinein. Dabei ist das Radialfederelement 180 von dem Axialfederelement 103 beabstandet.

Figur 5 zeigt eine perspektivische Ansicht einer Vertiefung 130 von der Oberseite 150 des Batteriezellhalters 101. Das Federkontaktelement 104 zwei Vorsprünge 182 auf, welche sich in Radialrichtung r von der Mittelachse M weg erstrecken. Die Vorsprünge 182 erstrecken sich somit in Radialrichtung r nach außen auf die Innenwand 170 der Vertiefung 130 des Batteriezellhalters 101 zu.

Zwischen den zwei Vorsprüngen 182 des Federkontaktelements 104 befindet sich ein Mittelbereich 184 des Federkontaktelements 104. Der besagte Mittelbereich 184 ist konkav ausgebildet. Das bedeutet, die Vorsprünge 182 sind von der Mittelachse M weiter beabstandet als der Mittelbereich 184. Der Mittelbereich 184 weist dabei eine auf die Mittelachse M hin gerichtete Krümmung auf.

Zwischen dem Radialfederelement 180, welches von der Innenwand 170 in Radialrichtung r in die Vertiefung 130 hinein ragt, und dem konkaven Mittelbereich 184 des Federkontaktelements 104 ist ein Spalt 190 gebildet. Der besagte Spalt 190 weist in einer Richtung rechtwinklig zu der Axialrichtung x eine Spaltbreite A auf. Die besagte Spaltbreite A des Spalts 190 ist dabei zumindest annährend konstant und entspricht einem Abstand zwischen dem Radialfederelement 180 und dem konkaven Mittelbereich 184 des Federkontaktelements 104. Die Form des axialen Federkontaktelementes 104 soll möglichst auf den stabilen Rand der Batteriezelle 110 drücken.

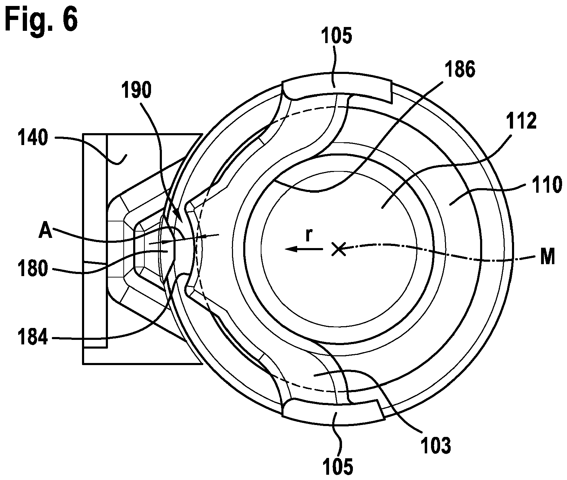

Figur 6 zeigt eine Draufsicht auf eine Batteriezelle 110 in einer Vertiefung 130 von der Unterseite 140 des Batteriezellhalters 101. Die Batteriezelle 110 ist dabei derart in die Vertiefung 130 des Batteriezellhalters 101 eingesetzt, dass der Pluspol 112 sich in der Vertiefung 130 befindet. Der Innenbereich 186 des Axialfederelements 103 schmiegt sich an den zumindest annähernd kreiszylindrischen Pluspol 112 der Batteriezelle 110 an.

Die Batteriezelle110 ist in der Axialrichtung x, in welche die Mittelachse M verläuft, mittels des Axialfederelements 103 federelastisch aufgenommen. Die Batteriezelle110 ist in der Radialrichtung r, welche rechtwinklig zu der Mittelachse M verläuft, mittels des Radialfederelements 180 federelastisch aufgenommen. Zwischen dem in dieser Darstellung verdeckten Federkontaktelements 104 und dem Radialfederelement 180 ist der Spalt 190 mit der Spaltbreite A gebildet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gehäuse (120) für ein Batteriemodul (100),
zur Aufnahme mindestens einer Batteriezelle (110), umfassend mindestens einen Batteriezellhalter (101),
welcher mindestens eine Vertiefung (130) aufweist,
welche zumindest annährend kreiszylindrisch und zumindest annährend rotationssymmetrisch zu einer in eine Axialrichtung (x) verlaufenden Mittelachse (M) ausgebildet ist, und
welche sich von einer Oberseite (150) des Batteriezellhalters (101) auf eine Unterseite (140) des Batteriezellhalters (101) zu erstreckt, wobei in der mindestens einen Vertiefung (130)
mindestens ein Axialfederelement (103) derart angeordnet ist, dass eine in die mindestens eine Vertiefung (130) eingesetzte Batteriezelle (110) in der Axialrichtung (x) federelastisch aufgenommen ist, wobei
an dem Axialfederelement (103) ein Federkontaktelement (104) angeordnet ist, welches sich in Axialrichtung (x) auf die Oberseite (150) zu erstreckt, und welches dazu eingerichtet ist, bei einer federelastischen Aufnahme einer Batteriezelle (110) eine Federkraft des Axialfederelements (103) auf die Batteriezelle (110) zu übertragen,
**dadurch gekennzeichnet, dass**
das Federkontaktelement (104) zwei Vorsprünge (182) aufweist, welche sich in Radialrichtung (r) von der Mittelachse (M) weg erstrecken und
an einer Innenwand (170) der Vertiefung (130) ein Radialfederelement (180) derart angeordnet ist, dass
die in die mindestens eine Vertiefung (130) eingesetzte Batteriezelle (110) in einer Radialrichtung (r) federelastisch aufgenommen ist.

2. Gehäuse (120) nach Anspruch 1, **dadurch gekennzeichnet, dass** ein zwischen den zwei Vorsprüngen (182) des Federkontaktelements (104) befindlicher Mittelbereich (184) konkav ausgebildet ist.

3. Gehäuse (120) nach Anspruch 2, **dadurch gekennzeichnet, dass**
das Radialfederelement (180) von der Innenwand (170) in Radialrichtung (r) in die Vertiefung (130) hinein ragt, wobei
ein Spalt (190) zwischen dem Radialfederelement (180) und dem konkaven Mittelbereich (184) des Federkontaktelements (104) gebildet ist.

4. Gehäuse (120) nach Anspruch 3, **dadurch gekennzeichnet, dass** eine Spaltbreite (A) des Spalts (190) zwischen dem Radialfederelement (180) und dem konkaven Mittelbereich (184) in einer Richtung rechtwinklig zu der Axialrichtung (x) zumindest annährend konstant ist.

5. Gehäuse (120) nach einem der vorstehenden Ansprüche, **dadurch gekennzeichnet, dass** ein der Mittelachse (M) zugewandter Innenbereich (186) des Axialfederelement (103) kreisbogenförmig ausgebildet ist.

6. Gehäuse (120) nach einem der vorstehenden Ansprüche, **dadurch gekennzeichnet, dass** in der mindestens einen Vertiefung (130) mindestens ein Anschlagselement (105) zur Begrenzung einer Biegung des Axialfederelements (103) vorgesehen ist.

7. Batteriemodul (100), umfassend
mindestens ein Gehäuse (120) nach einem der vorstehenden Ansprüche und
mindestens eine in dem Gehäuse (120) aufgenommene Batteriezelle (110).

8. Batteriemodul (100) nach Anspruch 7 , **dadurch gekennzeichnet, dass**
das mindestens eine Gehäuse (120) zwei Batteriezellhalter (101) umfasst, welche derart angeordnet sind, dass
die Oberseiten (150) der beiden Batteriezellhalter (101) einander zugewandt sind, wobei
die mindestens eine Batteriezelle (110) in jeweils eine Vertiefung (130) der beiden Batteriezellhalter (101) eingesetzt ist.

## Claims

1. Housing (120) for a battery module (100),
for accommodating at least one battery cell (110), comprising at least one battery cell holder (101)
which has at least one recess (130)
which is at least approximately circular-cylindrical and at least approximately rotational symmetrical with respect to a centre axis (M) running in an axial direction (x) and
which extends from a top side (150) of the battery cell holder (101) towards a bottom side (140) of the battery cell holder (101), wherein the at least one recess (130) has arranged in it
at least one axial spring element (103) in such a way that
a battery cell (110) inserted into the at least one recess (130) is accommodated resiliently in the axial direction (x), wherein
a spring contact element (104) is arranged on the axial spring element (103), which spring contact element extends towards the top side (150) in the axial direction (x) and, when a battery cell (110) is resiliently accommodated, is designed to transmit a spring force of the axial spring element (103) to the battery cell (110),
**characterized in that**
this spring contact element (104) has two projections (182) which extend away from the centre axis (M) in the radial direction (r) and
a radial spring element (180) is arranged on an inner wall (170) of the recess (130) in such a way that
the battery cell (110) inserted into the at least one recess (130) is accommodated resiliently in a radial direction (r).

2. Housing (120) according to Claim 1, **characterized in that** a central region (184) located between the two projections (182) of the spring
contact element (104) is of concave form.

3. Housing (120) according to Claim 2, **characterized in that**
the radial spring element (180) projects from the inner wall (170) into the recess (130) in the radial direction (r), wherein
a gap (190) is formed between the radial spring element (180) and the concave central region (184) of the spring contact element (104).

4. Housing (120) according to Claim 3, **characterized in that**
a gap width (A) of the gap (190) between the radial spring element (180) and the concave central region (184) is at least approximately constant in a direction perpendicular to the axial direction (x).

5. Housing (120) according to any of the preceding claims, **characterized in that** an inner region (186) of the axial spring element (103) facing the centre axis (M) is in the form of an arc of a circle.

6. Housing (120) according to any of the preceding claims, **characterized in that** at least one stop element (105) for limiting bending of the axial spring element (103) is provided in the at least one recess (130).

7. Battery module (100), comprising
at least one housing (120) according to any of the preceding claims, and
at least one battery cell (110) accommodated in the housing (120).

8. Battery module (100) according to Claim 7, **characterized in that**
the at least one housing (120) comprises two battery cell holders (101) which are arranged in such a way that
the top sides (150) of the two battery cell holders (101) face each other, wherein
the at least one battery cell (110) is inserted into a respective recess (130) of the two battery cell holders (101).

## Revendications

1. Boîtier (120) pour un module de batterie (100),
pour recevoir au moins une cellule de batterie (110), comprenant
au moins un support de cellule de batterie (101),
qui présente au moins une cavité (130),
qui est réalisée sous forme au moins approximativement cylindrique circulaire et au moins approximativement symétrique en rotation par rapport à un axe central (M) s'étendant dans une direction axiale (x), et
qui s'étend depuis un côté supérieur (150) du support de cellule de batterie (101) vers un côté inférieur (140) du support de cellule de batterie (101), dans l'au moins une cavité (130)
étant agencé au moins un élément à ressort axial (103) de telle sorte
qu'une cellule de batterie (110) insérée dans l'au moins une cavité (130) est reçue de manière élastique dans la direction axiale (x),
un élément de contact à ressort (104) étant agencé sur l'élément à ressort axial (103), lequel s'étend dans la direction axiale (x) vers le côté supérieur (150), et lequel est adapté pour transmettre une force de ressort de l'élément à ressort axial (103) à la cellule de batterie (110) lors d'une réception élastique d'une cellule de batterie (110),
**caractérisé en ce que**
l'élément de contact à ressort (104) présente deux saillies (182) qui s'étendent dans la direction radiale (r) en s'éloignant de l'axe central (M), et
un élément à ressort radial (180) est agencé sur une paroi intérieure (170) de la cavité (130) de telle sorte que
la cellule de batterie (110) insérée dans l'au moins une cavité (130) est reçue de manière élastique dans une direction radiale (r).

2. Boîtier (120) selon la revendication 1, **caractérisé en ce qu'**une zone centrale (184) se trouvant entre les deux saillies (182) de l'élément
de contact à ressort (104) est réalisée sous forme concave.

3. Boîtier (120) selon la revendication 2, **caractérisé en ce**
**que** l'élément à ressort radial (180) fait saillie à partir de la paroi intérieure (170) dans la direction radiale (r) dans la cavité (130),
un espace (190) étant formé entre l'élément à ressort radial (180) et la zone centrale concave (184) de l'élément de contact à ressort (104).

4. Boîtier (120) selon la revendication 3, **caractérisé en ce**
**qu'**une largeur de fente (A) de la fente (190) entre l'élément à ressort radial (180) et la zone centrale concave (184) est au moins approximativement constante dans une direction perpendiculaire à la direction axiale (x).

5. Boîtier (120) selon l'une quelconque des revendications précédentes, **caractérisé en ce qu'**une zone intérieure (186) de l'élément à ressort axial (103), tournée vers l'axe central (M), est réalisée en forme d'arc de cercle.

6. Boîtier (120) selon l'une quelconque des revendications précédentes, **caractérisé en ce qu'**au moins un élément de butée (105) destiné à limiter une flexion de l'élément à ressort axial (103) est prévu dans l'au moins une cavité (130).

7. Module de batterie (100) comprenant
au moins un boîtier (120) selon l'une quelconque des revendications précédentes, et
au moins une cellule de batterie (110) reçue dans le boîtier (120).

8. Module de batterie (100) selon la revendication 7, **caractérisé en ce que**
l'au moins un boîtier (120) comprend deux supports de cellule de batterie (101) qui sont agencés de telle sorte que
les côtés supérieurs (150) des deux supports de cellule de batterie (101) sont tournés l'un vers l'autre,
l'au moins une cellule de batterie (110) étant insérée dans une cavité (130) respective des deux supports de cellule de batterie (101).
